# EUROPEAN PATENT APPLICATION

(11) **EP 1 623 620 A1**
(43) Date of publication of application: **08.02.2006**
(21) Application number: 04727574.8
(22) Date of filing: 15.04.2004
(51) Int. Cl.: A01G 17/08, A01G 5/02, B65B 27/10

(54) **HEADS OF BINDING MACHINES**

(30) Priority: 15.04.2003 ES 200300895
(71) Applicant: Simes-Senco, S.A., 31486 Elcano (ES)
(72) Inventor: CORCHON ZAMORA, Carlos, E-31620 Huarte (ES); FARRES CARBONELL, Jordi, E-31314 Santacara (ES)
(74) Representative: Urteaga Simarro, José Antonio
(86) International application number: PCT/ES2004/000164
(87) International publication number: WO 2004/091284

(57) **Abstract**

New heads adapted to a tape stapler machine in order to carry out all kinds of tightening binding and stapling operations, not only for props, guides, canes or bunches or bundles of twigs or branches, but also any group of parts or items that require a certain binding tension so that they become well fitted or adjusted to each other, with the binding creating a certain reactive force, for which a type of tape is used which has a degree of elasticity capable of supporting the increase in the reactive tension of the bound bundle and to give rigidity and robustness to the binding.

## Description

The development in this invention is based on the new adaptation of heads or workheads for tape stapler devices in order to bind or tie together bunches or bundles of branches, twigs, props or canes - among other items -, in which the said bindings require pressure which is not permanently rigid and with a fixed amount of pressure, but rather which can be made flexible depending on the tightness requirements according to the type of bunch or bundle that requires binding.

More specifically, this invention is the result of an attempt to improve the heads of a tape stapler based on US 5,397,045, belonging to the same applicant, with the purpose of enabling the use of a kind of tape which is elastic enough to allow tape staplers to be used for new applications, thereby overcoming the limitation that devices of this kind had until now.

In view of the fact that this invention only seeks to claim the adaptation of new heads to a tape stapler device already patented by the same applicant, in accordance with US 5,397,045, the invention is going to be limited to describing and claiming those aspects which are related with these new heads, which are based on the use of other kinds of tape - with elastic material - in order to present a new use in the market which involves substantial improvements in use.

The state of the art allows us to know that machines which perform the kind of work in which bunches or bundles are bound together work with a kind of material that does not give the binding the sufficient amount of elasticity to enable the bundle or bunch of branches or twigs to be able to develop without the binding in question offering resistance, or, even worse, without it causing notching or indentations due to strangling of the plants (such as in the case of grape vine shoots in vineyards).

There are processes that use other kinds of bindings, such as the use of tape rolls in a totally manual operation - carried out with bare hands - that entails certain limitations as regards time and protection from damage due to the binding stresses, which brings about the need to use protective gloves in order to solve this situation and thereby achieve a better quality of work, but with a considerable loss in execution costs.

Another solution is to use rubber tapes in order to train the shoots of grape vines along the guide wires, for example, but the properties of these tapes become degraded due to the effects of sunlight.

And, finally, a device can be used which manually braids or entwines a thin wire between the vine shoot and the wire, although the complete rigidity of the thin wire tends to strangle the vine shoot and therefore impede its natural development.

The stapling of the tape, whether carried out manually or by means of a machine, must be adapted to the characteristics of the binding, and therefore any modification of the latter explicitly means that the operation of stapling must be directly related with the cutting of the kind of tape used in each case. And yet another consequence is that the type of staple which must be used will depend on the kind of tape with which the binding is carried out, whatever the operating circumstances might be.

The use of gloves in manual binding operations and the slowing down that both concepts -gloves and manual operation- entail, especially in the winter season, explain that the agricultural sector, for example, demands a more profitable solution in the process of applying tape stapling to branches, vine shoots, etc. in order to obtain a good operational performance.

The use of the tape stapler adapted to the use of elastic tape achieves considerable improvements so as to be able to carry out the permanent binding of bunches or bundles, and of the guides for vine shoots, combined with the use of gloves (such as in application during the winter season in the case of vines), and to carry out a fast flexible binding that enables the normal development of the bunch or bundle or of the vine shoots by preventing the appearance of notches, indentations or strangling.

This adaptation of the tape stapler to different kinds of tape requires the adjusting of the heads of the tape stapler machine, not only for the parts adopted but also for their corresponding regulation, since the process of taping and stapling is carried out automatically and progressively and for this purpose the tape stapler machine based on US 5,397,045 is used.

One objective of the invention is to be able to use tapes with different degrees of flexibility, depending on the kind of binding, such as those made of plastic or of elastic fabric -of the crochet or braided type- in terms of the dimensional or physical characteristic variables such as elasticity and breaking point.

Another objective of the invention is the use of tape staplers with the heads adapted to the use of elastic tapes and their particular characteristics that enable the use of gloves, thus improving productivity by achieving higher operator performance.

Another objective of the invention is the provision of the following in the heads: a spring system of with a greater recovery stress in the upper and a more regular and adjustable system of braking the tape itself at the moment of tightening in order to carry out the stapling of the tape in the lower, according to the degree of stretching of the elastic material, in accordance with the work to be carried out.

Another objective of the invention is that the heads have the following: the upper one has a tape centring guide so as to enable good positioning of the tape so that it can be stapled and cut, as well as modifying other parts such as the tongue and the claw, with which a feeding system is provided which is suitable for elastic tapes, while the lower one has a square part to guide the tape so as to present it with a determined degree of tension at the moment of feeding, acting as a mechanical braking effect.

And, finally, another objective of the invention is for the heads to enable the use of staples with a greater stapling stress.

These adaptations of the heads of tape stapler machines, in order to work with elastic tapes, carry out all these work operations of tape staplers by means of the incorporation of certain parts, already mentioned and by modifying other parts of the tape stapler whose patent has also been mentioned, incorporating substantial improvements into their work capacity, such as the fact that an elastic binding is achieved that provides a better treatment to vine shoots, because the connection to their guides does not allow indentation, notching or strangling of the vine shoot caused by a rigid binding, as happens with the heads of current machines.

In the attached drawings, details of the following can be seen:
- Figure 1 represents a general elevation view of a tape stapler machine in its rest position.
- Figure 2 is an elevation of the upper head.
- Figure 3 is an assembly cross section of the upper head.
- Figure 4 is another assembly cross section of the upper head.
- Figure 5 is an assembly cross section of the lower head
- Figure 6 is an elevation of the lower head
- Figure 7 shows the tape guide for stapling.
- Figure 8 represents the assembly of the tape guide for stapling.
- Figure 9 shows the side and front views of the feeding tongue.
- Figure 10 is the square part to guide the tape in feeding.
- Figure 11 represents the swivelling unit not represented in Figures 5 and 6.

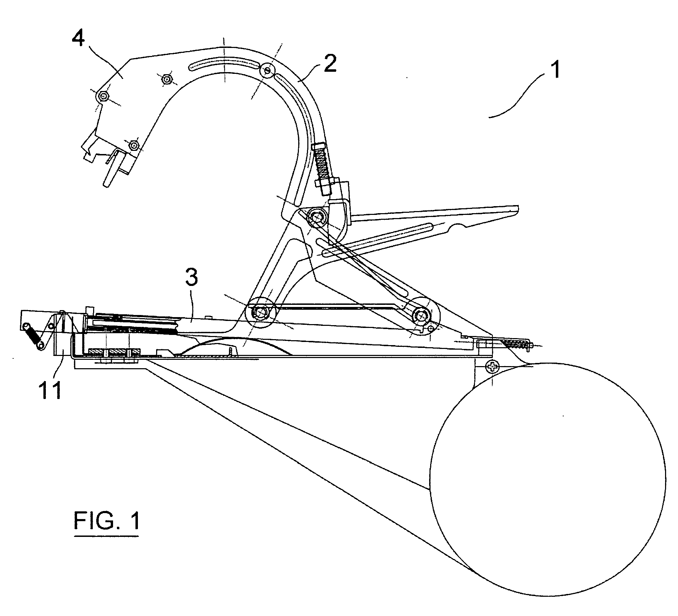

In Figure 1, a tape stapler machine (1) can be appreciated, of which express mention will only be made of those items which are going to be the main objective of the patent, since the rest of its configuration and operation are described, specified and claimed in the already mentioned US 5,397,045.

The main references to be described, in general, are to be found, on the one hand, on the upper head (4), situated at one end of the upper arm (2), and where all the items that carry out the feeding and stretching operations of an elastic tape that will later be stapled are housed and, on the other hand, on the lower head (11), situated at one end of the lower arm (3), and where the device for stapling and cutting the elastic tape is provided.

All the other component elements of the tape stapler machine, such as the storage for the elastic tape, the staple loader or holder and the mechanical method of operation of the lever system are not considered because they are irrelevant in the objective of the invention.

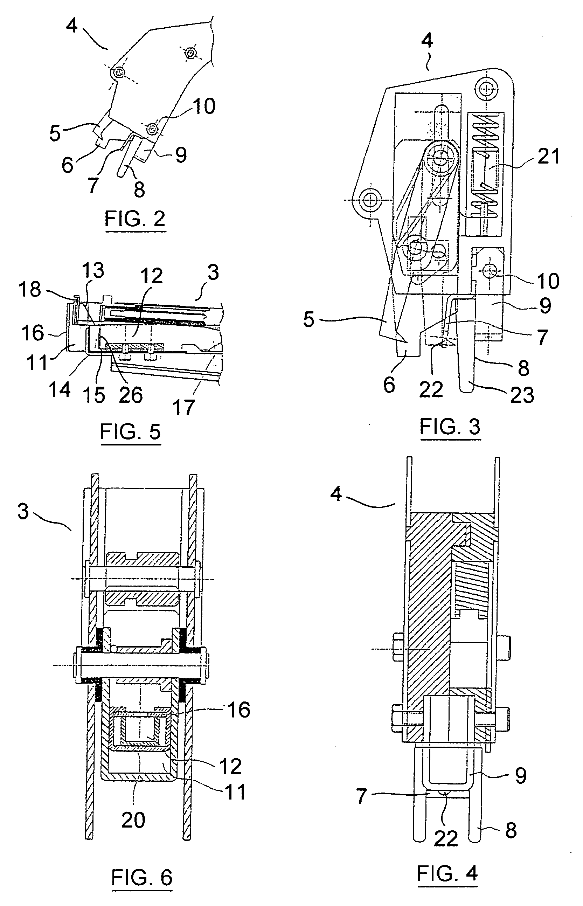

Figure 2 shows the composition of the upper head (4) by the disposal of the parts that carry out the feeding of the tape, such as the claw (5), the pusher (6), the tongue (7), the guide (8) to suitably arrange the tape for the feeding operation, and the anvil (9), which supports the staple so that it can be stapled.

In Figure 3 we have a side view of the upper head (4), where the operating system (which has not undergone any kind of modification with respect to US 5,397, 045) is represented, together with the parts that come in to form part of the tape feeder system: the claw (5) that engages or ensnares the tape; the pusher (6) that acts on the stop (16) on the lower head (11) in order to initiate the feeding process, firstly, and the stapling process secondly; the tongue (7), provided with a centring hole (22) so as to engage the tape, which is pulled by the end of the claw (5) until it is inserted into the hole (22). The inverted U-shaped part is the entry guide (8) in order to position the tape on the anvil. Guiding is carried out by means of two legs (23) that act as a side stop in the possible displacement of the tape. The bushing (10) coordinates the action of the guide (8), which is welded to the anvil (9), counteracting the spring (21), the positioning stress of the guide-anvil unit (8, 9) after the stapling operation has been carried out.

Figure 4 is a side view of the upper head (4), which shows the detail of the u-shaped part of the guide (8) for the correct alignment and positioning of the tape.

In Figures 5 and 6, the lower head (11), situated at one end of the lower arm (3) can be observed. On this arm, the square part (18) and the toothed blade (13) can be appreciated, which are respectively responsible for guiding and cutting the tape that is fed through the zone (15) from its storage place. Moreover, it can be observed how the staples (12) are guided along a track (20) so as to be operated by the staple pusher (26), so that when it is supported on the anvil (9) of the upper head when both heads come into contact, stapling of the tape is carried out.

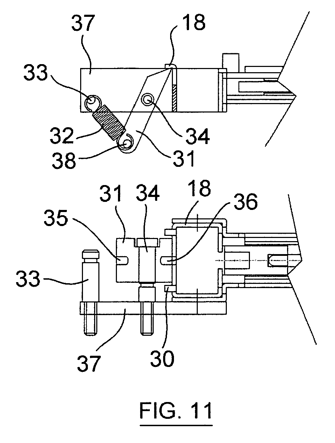

In Figures 5 and 6, the swivelling unit represented in Figure 11, which is used to tighten or tense the tape, has not been represented.

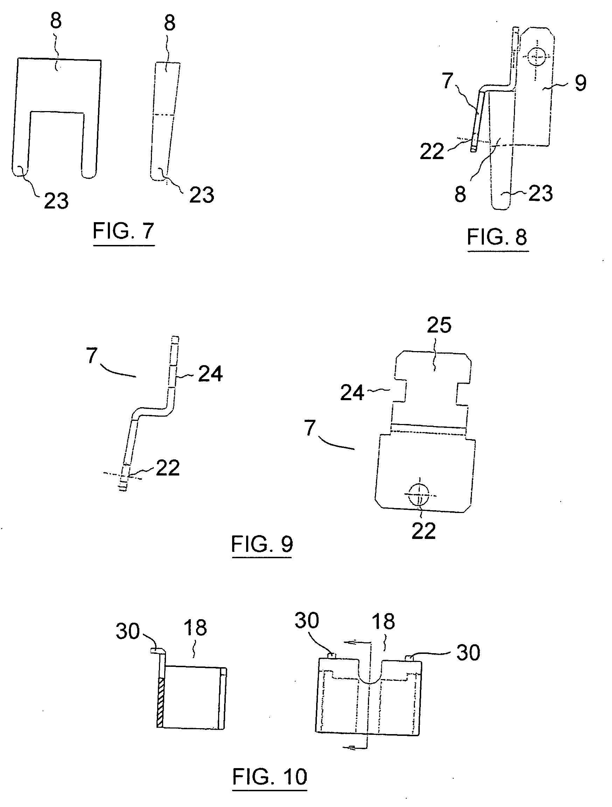

Figure 7 is the guide (8), a new part which is incorporated into the upper head so as to form part of the stapling of the tape and which prevents the lateral displacement of the tape by forcing the positioning of the tape between its two legs (23) so as to situate it on the anvil (9).

In Figure 8 it is possible to appreciate the assembly of the unit made up of the tongue (7) for feeding, the tape guide (8) for stapling and the anvil (9) to support the stapling, with the guide (8) being welded to the anvil (9) in order to provide greater tape guiding security in the stapling operation.

In Figure 9, the tongue (7) can be appreciated, with its centring hole (22), connected to the unit by means of the fixing leg (24) and the side recesses (25).

Figure 10 represents the square part (18) which is situated in the feeding area of the lower head (11) and whose purpose is to act as a guide for each kind of tape, for which it is provided with two flanges (30), between which the tape is guided.

In Figure 11, a plan view and elevation of the swivelling unit not represented in Figures 5 and 6 has been represented. This swivelling unit is present on the lower head and its purpose is to carry out the tightening or tensing of the tape so that it is adapted to the elasticity of the tape. The main parts of the swivelling unit are, on the one hand, a swivelling part (31) that turns on a shaft (34) and with respect to a fixed part (37) fixed to the lower head and, on the other hand, a spring which has one end fixed to the fixed part (37) by means of a shaft (33) and the other end fixed to the swivelling part (31). The operation of the spring (32) tends to turn the swivelling part (31) in a clockwise direction, so that in the tape passage area, i.e. in the area of the end of swivelling part closer to the square part (18), the swivelling part carries out tightening or tensing, regulated by the spring (32), which depends on the thickness and on the elasticity of the tape.

In the plan view of the swivelling unit it can be appreciated how the swivelling part (31) is provided with a cavity (35) that houses the shaft (38) for engaging the spring (32), and with another cavity that enables access to the tape by the claw from the upper head when the engaging or ensnaring of the tape takes place.

The heads in accordance with the invention provide a resulting tape stapler machine which makes it possible to avoid strangling by bindings, especially in vine shoots and other kinds of plants. Moreover, the use of elastic tape allows binding work to be carried out with gloves.

## Claims

1. Heads to cut and staple elastic tape in tape stapler machines, of the type composed essentially of a lower body with a container and a guide for tape, a staple loader and a lower head for stapling and cutting the tape, and an upper body with articulated and adjustable movement of a control lever and an extendable and adjustable rotating arm with an upper head for feeding, stretching and a stop for the taping operation, in which, during the engaging of the tape, parts such as a claw and a tongue present in the upper head take part, wherein:
- the retention of the elastic tape in the lower head adapts to the type of elastic tape to be used, for which the lower head is provided with a swivelling part (31) that exerts variable pressure on the tape, by means of the action of a spring (32) which makes the swivelling part (31) turn in the tape tightening direction,
- the elastic tape to be used is variable not only in its thickness but also in its elasticity in terms of the type of binding to be carried out,
- the feeding, stretching, guiding and positioning for stapling and cutting of the elastic tape take place in the upper head, adapted in each case to the tension required by the type of tape to be used,
- the width adjustment, tightened or tensed retention, stapling and cutting of the elastic tape take place in the lower head.

2. Heads to cut and staple elastic tape in tape stapler machines, in accordance with claim 1, wherein the upper head is provided with a guide part (8) in order to guide the tape and prevent its lateral displacement, for which the guide (8) is provided with two legs (23) that delimit the space through which the tape passes.

3. Heads to cut and staple elastic tape in tape stapler machines, in accordance with claim 1, wherein the swivelling part (31) and the spring (32) are connected to their respective shafts (34, 33) which are secured to a fixed part (37) with respect to the lower head.

4. Heads to cut and staple elastic tape in tape stapler machines, in accordance with claim 1, wherein the swivelling part (31) applies pressure on the tape in the tape engagement area, and is provided with a cavity (36) to enable a claw from the upper head to enter at the time of engaging the tape.

5. Heads to cut and staple elastic tape in tape stapler machines, in accordance with claim 1, wherein the type of elastic tape is of the braided textile kind.

6. Heads to cut and staple elastic tape in tape stapler machines, in accordance with claim 1, wherein the type of elastic tape is of the crochet textile kind.

7. Heads to cut and staple elastic tape in tape stapler machines, in accordance with claim 1, wherein the type of elastic tape is of the elastic polymer kind.

8. Heads to cut and staple elastic tape in tape stapler machines, in accordance with claim 1, wherein the claw and the tongue of the upper head are carried out in adaptation to the type of elastic tape.
